# EUROPÄISCHE PATENTSCHRIFT

(11) **EP 2 926 989 B1**
(45) Veröffentlichungstag und Bekanntmachung des Hinweises auf die Patenterteilung: **23.08.2017**
(21) Anmeldenummer: 15000039.6
(22) Anmeldetag: 10.01.2015
(51) Int. Cl.: B32B 7/12, B27N 3/14, B32B 21/10, B32B 21/13, B32B 3/18, E04C 2/10, E04C 2/24

(54) **Türrohling**
Door blank
Ébauche de porte

(30) Priorität: 03.04.2014 DE 102014004819; 25.08.2014 DE 102014012368
(43) Veröffentlichungstag der Anmeldung: 07.10.2015
(73) Patentinhaber: Moralt AG, 83734 Hausham (DE)
(72) Erfinder: Feile, Klaus, 83661 Lenggries (DE)
(74) Vertreter: Säger, Manfred

(56) Entgegenhaltungen:
- EP-A1- 2 030 747

## Beschreibung

Die Erfindung betrifft einen gattungsgemässe normal entflammbaren Türrohling ohne Rahmenfriese nach dem Oberbegriff des Hauptanspruchs sowie dessen Verwendung.

Holzwerkstoffplatten sind in einer Vielzahl von Ausführungsformen bekannt (DE 198 31 019 A1; FR 1397 431; US 1 734 826). Auch solche Holzwerkstoffplatten als Türrohlinge mit einer als Stablage ausgebildeten Mittellage sind bekannt (EP 1 584 461 A1) und haben sich insbesondere für Türrohlinge bewährt. Allerdings weisen sie bei Klima- sowie Temperaturänderungen eine starke Welligkeit auf, was unerwünscht ist. Es hat sich auch herausgestellt, dass die Holzwerkstoffplatte im Brandfall einer starken Verwindung unterliegt, die, auch wegen ihres hohen Gewichts grössere Formate verbietet.

Es ist schliesslich ein gattungsgemässer Türrohling ohne Rahmenfries nach dem Oberbegriff des Hauptanspruchs bekannt (EP 20 30 747 A1). Diese offenbart einen normal entflammbaren Türrohling ohne Rahmen, der sich bewährt hat. Allerdings ist aus manchertlei Gründen, insbesondere der Festigkeit des Rohlings im normalen Einsatz der dabei verwendete Stärke- oder Weißleim für die Stäbchenmittellage nicht geeignet. Ebenso wäre es wünschenswert, nicht nur auf die hierbei üblichen Holzarten wie Tanne oder Fichte zurückzugreifen zu müssen, sondern auch andere preislich günstigere Holzarten verwenden zu können.

Der Erfindung liegt daher die Aufgabe zugrunde, einen solchen gattungsgemässen normal entflammbaren Türrohling nach dem Oberbegriff des Hauptanspruchs für andere Festigkeiten im normalen Einsatz und zugleich mit preislich günstigeren Holzarten weiterzubilden.

Diese Aufgabe wird bei einem gattungsgemässen Türrohling nach dem Oberbegriff des Hauptanspruchs erfindungsgemäss durch dessen kennzeichnende Merkmale, also einerseits dadurch gelöst, dass die Mittellage überwiegend Stäbchen aus einem Holzwerkstoff von europäischen Hölzern mit einer Rohdichte von mindestens 350 kg/m³ bis maximal 550 kg/m³ aufweist und der zweite Leim als duroplastischer Leim ausgebildet ist, andererseits durch die Verwendung der Holzwerkstoffplatte als Türrohling einer Brandschutztür.

Überraschenderweise hat sich ergeben, dass die erfindungsgemässe Holzwerkstoffplatte trotz z.B. des Einsatzes von Kiefer als Holzwerkstoff von europäischen Hölzern für die Stäbchen, das Brandschutzverhalten nicht geschmälert wird, obwohl der Holzfachmann erwarten würde, dass Kiefer mit einer Mindestrohdichte von etwa 400 kg/m³ deutlich leichter und schneller als Fichte oder Tanne brennt, weil es sich bei der Kiefer um einen harzigen Kernholzbaum handelt und der Gehalt an Harz vergleichsweise sehr hoch ist sowie ausserdem diese Inhaltsstoffe als Brandbeschleuniger wirken. Sie sorgen dafür, dass das Holz schneller und besser abbrennt und infolgedessen beim Abbrand keine Kohlestruktur als Isolierschicht stehen bleibt. Schliesslich setzt die Kiefer beim Verbrennen einen höheren Energieinhalt frei, was die Verbrennung zusätzlich fördert und den Brandschutz von Bauteilen aus Kiefernholz mindert. Auch hätte der Holzfachmann zusätzlich erwartet, dass die Stäbchen-Mittellage mit den einzelnen mit hochfesten duroplastischen Klebern verleimten Stäbchen zu einer partiellen Rissbildung neigen würden, wie es der Fall ist, wenn die Mittellage aus gewachsenem Massivholz bestünde, weil dann infolge der durch den sogenannten abnormalen Schwund hervorgerufenen Spannungen sich eine deutliche Rissbildung einstellen würde. Dieser abnormale Schwund von Holz beim Abbrand ist zwar größer als der Feuchteschwund beim Trocknen aber derart gleichmässig, dass sich praktisch keine Risse gebildet haben, an denen das Feuer die Schicht schneller durchgebrannt hätte. Überraschenderweise hat sich im Gegenteil erfindungsgemäss aber gezeigt, dass zwar jedes einzelne Stäbchen für sich abnormal schwindet, aber die dazwischen befindlichen Leimfugen sehr wohl eine im Abbrand stehen bleibende Kohlestruktur und zusammen mit den angekohlten Stäbchen als gesamte Mittellage aus Stäbchen und Leimfugen eine gewissermassen elastische Matte als Isolierschicht bildet, die den Feuerwiderstand realisiert.

Insgesamt wird mit der Erfindung also eine überraschend günstig herstellbare, einfach aufgebaute, normal entflammbare, grossformatige Holzwerkstoffplatte mit grosser Festigkeit und geringer Welligkeit an deren Oberfläche bei ausgezeichneter Stabilität im Brandfall bereitgestellt.

Weitere zweckmässige Ausgestaltungen und Weiterbildungen des Türrohlings sind in den betreffenden Unteransprüchen gekennzeichnet.

## Patentansprüche

1. Normal entflammbarer Türrohling (10) ohne Rahmenfriese mit einer Mittellage (5) und mit zumindest je einer auf diese aufgeleimten, den äusseren Abschluss der Holzwerkstoffplatte (10) bildenden Aussenschicht (9) aus einem Holzwerkstoff oder Absperrfurnieren beiderseits der Mittellage (5), wobei die Mittellage miteinander verleimte Stäbchen (7) als sogenannte Stäbchenlage aufweist, deren Holzfasern parallel zueinander sowie rechtwinklig zu jeder Aussenschicht (9) verlaufen, wobei die Aussenschichten (9) auf die Mittellage (5) mittels eines entweder als Harnstoff-Formaldehyd-Klebstoff (KUF) oder als Melamin-Harnstoff-Formaldehyd-Klebstoff (MUF) ausgebildeten ersten Leims (6) aufgeleimt und die Stäbchen (7) der Mittellage (5) miteinander mit einem zweiten Leim verleimt sind, **dadurch gekennzeichnet, dass** die Mittellage (5) überwiegend Stäbchen (7) aus einem Holzwerkstoff mit einer Rohdichte von mindestens 350 kg/m³ bis maximal 550 kg/m³ von bevorzugt europäischen Hölzern aufweist und der zweite Leim als duroplastischer Leim ausgebildet ist.

2. Türrohling nach Anspruch 1, **dadurch gekennzeichnet, dass** der zweite Leim ein Phenolharz-, Harnstoffharz- oder Melaminharzleim ist.

3. Türrohling nach einem der vorangehenden Anspruche, **dadurch gekennzeichnet, dass** die Stäbchen (7) der Mittellage (5) im Einzelverbund oder im Bündelstoss angeordnet und mit dem zweiten Leim verklebt sind.

4. Türrohling nach Anspruch 3, **dadurch gekennzeichnet, dass** als Stäbchen (7) der Mittellage (5) überwiegend Stäbchen (7) aus Kiefer vorgesehen sind.

5. Türrohling nach Anspruch 3, **dadurch gekennzeichnet, dass** die Stäbchen (7) der Mittellage (5) einen rechteckförmigen oder quadratischen Qürschnitt mit einer Seitenlänge von kleiner 4,6 mm aufweisen.

6. Verwendung eines Türrohlings nach einem der Ansprüche 1 bis 5 für eine Brandschutztür.

7. Verwendung nach Anspruch 6, **dadurch gekennzeichnet, dass** als Mittellage (5) überwiegend Stäbchen (7) aus Kiefer und als zweiter Leim ein duroplastischer Leim, insbesondere Phenolharz-, Harnstoffharz- oder Melaminharzleim verwendet wird.

## Claims

1. A normally flammable door blank (10) without frame members, having a middle ply (5) and having at least one outer layer (9) on each side of the middle ply (5), which outer layer is glued to said middle ply, forms the outer termination of the wood-based material board (10) and consists of a wood-based material or crossband veneers, the middle ply having rods (7) glued to each other in the form of a rod layer, the wood fibres of which run parallel to each other and at right angles to each outer layer (9), the outer layers (9) being glued to the middle ply (5) by means of a first glue (6) in the form of a urea formaldehyde (UF) glue or in the form of a melamine urea formaldehyde (MUF) glue, and the rods (7) of the middle ply (5) being glued to each other with a second glue, **characterized in that** the middle ply (5) primarily contains rods (7) consisting of a wood-based material having a bulk density of at least 350 kg/m³ to at most 550 kg/m³ from preferably European woods, and the second glue is in the form of a thermosetting glue.

2. The door blank according to claim 1, **characterized in that** the second glue is a phenolic resin glue, urea resin glue or melamine resin glue.

3. The door blank according to any one of the preceding claims, **characterized in that** the rods (7) of the middle ply (5) are arranged in a single composite or in bundled butt joints and glued together with the second glue.

4. The door blank according to claim 3, **characterized in that** primarily rods (7) consisting of pine are provided as the rods (7) of the middle ply (5).

5. The door blank according to claim 3, **characterized in that** the rods (7) of the middle ply (5) have a rectangular or square cross-section with a side length of less than 4.6 mm.

6. A use of a door blank according to any one of claims 1 to 5 for a fire-protection door.

7. The use according to claim 6, **characterized in that** primarily rods (7) consisting of pine are used as the middle ply (5) and a thermosetting glue, in particular phenolic resin glue, urea resin glue or melamine resin glue, is used as the second glue.

## Revendications

1. Ebauche de porte normalement inflammable (10) sans frise d'encadrement avec une couche intérieure (5) et avec au moins une couche extérieure (9) en matériau à base de bois ou placage extérieur des deux côtés de la couche intérieure (5), collée sur celle-ci formant respectivement une fermeture extérieure du panneau en matériau à base de bois (10), la couche intérieure comportant des lamelles (7) collées les unes aux autres en tant que dite couche de lamelles, dont les fibres de bois passent parallèlement les uns aux autres ainsi que perpendiculairement à chaque couche extérieure (9), les couches extérieures (9) étant collées sur la couche intérieure (5) au moyen soit d'une première colle (6) constituée soit comme une colle urée-formaldéhyde (UF), soit comme une colle mélamine-urée-formaldéhyde (MUF) et les lamelles (7) de la couche intérieure (5) étant collées les unes aux autres avec une deuxième colle, **caractérisée en ce que** la couche intérieure (5) comporte surtout des lamelles (7) d'un matériau à base de bois avec une densité brute d'au moins 350 kg/m³ jusqu'à un maximum de 550 kg/m³ de bois de préférence européens et la deuxième colle est constituée comme une colle thermodurcissable.

2. Ebauche de porte selon la revendication 1, **caractérisée en ce que** la deuxième colle est une colle à la résine phénolique, à la résine d'urée ou à la résine de mélamine.

3. Ebauche de porte selon l'une quelconque des revendications précédentes, **caractérisée en ce que** les lamelles (7) de la couche intérieure (5) sont disposées en ensemble composite unique ou en assemblage en faisceaux et sont collées avec la deuxième colle.

4. Ebauche de porte selon la revendication 3, **caractérisée en ce que** des lamelles (7) surtout en pin sont prévues comme lamelles (7) de la couche intérieure (5).

5. Ebauche de porte selon la revendication 3, **caractérisée en ce que** les lamelles (7) de la couche intérieure (5) comportent une section rectangulaire ou quadratique avec une longueur latérale inférieure à 4,6 mm.

6. Utilisation d'une ébauche de porte selon l'une quelconque des revendications 1 à 5 pour une porte antifeu.

7. Utilisation selon la revendication 6, **caractérisée en ce qu'**on utilise comme couche intérieure (5) surtout des lamelles (7) en pin et en tant que deuxième colle, une colle thermodurcissable, notamment une colle de résine phénolique, de résine d'urée ou de de résine de mélamine.
